# EUROPEAN PATENT APPLICATION

(11) **EP 4 841 421 A1**
(43) Date of publication of application: **18.11.2026**
(21) Application number: 24917031.7
(22) Date of filing: 13.12.2024
(51) Int. Cl.: G06F 3/12, G06K 17/00, H04N 1/00, H04N 1/32, B41J 3/407, G06K 15/02

(54) **INFORMATION PROCESSING SYSTEM, INFORMATION PROCESSING DEVICE, PROGRAM, AND INFORMATION PROCESSING METHOD**

(30) Priority: 12.01.2024 JP 2024003633
(71) Applicant: SATO Corporation, Tokyo 108-0023 (JP)
(72) Inventor: NAGATANI, Toshiyuki, Tokyo 108-0023 (JP); OGUCHI, Kentaro, Tokyo 108-0023 (JP)
(74) Representative: Grünecker Patent- und Rechtsanwälte PartG mbB
(86) International application number: PCT/JP2024/044183
(87) International publication number: WO 2025/150347

(57) **Abstract**

An aspect of the present invention provides an information processing system that includes a printer issuing a print medium including a wireless tag and that includes an information processing device communicable with the printer. The information processing device stores each of a plurality of pieces of print information in association with writing data including print identification information identifying the print information, and transmits, to the printer, an issuing instruction including the print information and the writing data. Based on the issuing instruction, the printer writes the writing data to the wireless tag, and prints the print information on the print medium. The printer generates, in association with tag identification information, log information including a writing result and print identification information included in the writing data. The information processing device associates, with the log information, the print information included in the plurality of pieces of print information and associated with the print identification information included in the log information received from the printer.

## Description

### FIELD

The present invention relates to information processing related to a printer.

### BACKGROUND

A conventionally known radio-frequency-identification (RFID) printer prints on a label (RFID label) in which an RFID inlay (hereinafter, simply referred to as "inlay") is incorporated. The inlay includes an IC chip and an antenna. When printing on the label in which the inlay is incorporated, the RFID printer writes (encodes) data to the inlay by an RFID unit such as an interrogator mounted on the printer (refer to Japanese Patent Application Laid-Open Publication No. 2020-157521).

### BRIEF SUMMARY

### TECHNICAL PROBLEM

Incidentally, it is required that log information be managed in an integrated manner by a server communicable with the printer, in association with print information printed on the label in which the inlay is incorporated. The log information indicates what data have been actually written to which inlay.

In view of the above, an object of the present invention is to manage, in association with print information printed on a print medium, log information concerning data written to a wireless tag of the print medium including the wireless tag.

### SOLUTION TO PROBLEM

An aspect of the present invention provides an information processing system that includes a printer and an information processing device. The printer issues a print medium including a wireless tag. The information processing device can communicate with the printer.

The information processing device includes a storage unit and an issuing instruction unit. The storage unit stores each of a plurality of pieces of print information in association with writing data. The writing data include print identification information that identifies the print information. The issuing instruction unit transmits an issuing instruction to the printer. The issuing instruction includes one of the plurality of pieces of print information and the associated writing data.

The printer includes a first communication unit, a printing unit, a control unit, and a second communication unit. The first communication unit communicates to write the writing data to the wireless tag, based on the issuing instruction. The printing unit prints the print information on the print medium, based on the issuing instruction. The control unit generates log information in association with tag identification information that identifies the wireless tag. The log information includes a writing result and the print identification information. The writing result indicates whether the first communication unit has successfully performed writing to the wireless tag. The print identification information is included in the writing data. The second communication unit transmits the log information to the information processing device.

The information processing device further includes a control unit that associates, with the log information, the print information that is included in the plurality of pieces of print information and that is associated with the print identification information included in the log information received from the printer.

### ADVANTAGEOUS EFFECTS

According to an aspect of the present invention, log information concerning data written to a wireless tag of a print medium including the wireless tag can be managed in association with print information printed on the print medium.

### BRIEF DESCRIPTION OF DRAWINGS

FIG. 1 illustrates a schematic configuration of a printer according to one embodiment.
FIG. 2 is a block diagram of a label log system according to one embodiment.
FIG. 3 illustrates an example of a data configuration of an issuing instruction database.
FIG. 4 is a flowchart that represents issuing processing of the printer according to one embodiment.
FIG. 5 is an illustration of a configuration of pre-modification and post-modification log data.
FIG. 6 is a sequence chart that represents processing of the label log system according to one embodiment.
FIG. 7 illustrates an example of a data configuration of a log database.

### DETAILED DESCRIPTION

Configurations described below are not limited to those in the drawings described in the Brief Description of the Drawings.

A first aspect of the present invention provides an information processing system that includes a printer and an information processing device. The printer issues a print medium including a wireless tag. The information processing device can communicate with the printer. The information processing device includes a storage unit and an issuing instruction unit. The storage unit stores each of a plurality of pieces of print information in association with writing data. The writing data include print identification information that identifies the print information. The issuing instruction unit transmits an issuing instruction to the printer. The issuing instruction includes one of the plurality of pieces of print information and the associated writing data. The printer includes a first communication unit, a printing unit, a control unit, and a second communication unit. The first communication unit communicates to write the writing data to the wireless tag, based on the issuing instruction. The printing unit prints the print information on the print medium, based on the issuing instruction. The control unit generates log information in association with tag identification information that identifies the wireless tag. The log information includes a writing result and the print identification information. The writing result indicates whether the first communication unit has successfully performed writing to the wireless tag. The print identification information is included in the writing data. The second communication unit transmits the log information to the information processing device. The information processing device further includes a control unit that associates, with the log information, the print information that is included in the plurality of pieces of print information and that is associated with the print identification information included in the log information received from the printer.

According to the first aspect of the present invention, the log information concerning the data written to the wireless tag in the print medium including the wireless tag can be associated with the print information printed on the print medium. Thus, the log information and the print information for each print medium can be managed in an integrated manner in the information processing device.

A second aspect of the present invention provides the information processing system according to the first aspect, further including a terminal device that can communicate with the information processing device, wherein the device-side control unit notifies a message to the terminal device when the print identification information included in the log information received from the printer does not match with the print identification information included in any of pieces of the writing data stored in the storage unit.

According to the second aspect of the present invention, a user of the terminal device can recognize that the log information includes inappropriate print identification information.

A third aspect of the present invention provides the information processing system according to the first or second aspect, wherein the storage unit stores each of the plurality of pieces of print information in association with the writing data and user information, and when the print identification information included in the log information received from the printer matches with the print identification information included in any of pieces of the writing data stored in the storage unit, the device-side control unit associates the corresponding print information and user information with the log information.

According to the third aspect of the present invention, the log information for a specific user can be extracted

A fourth aspect of the present invention provides the information processing system according to any one of the first to third aspects, wherein the data written to the wireless tag include information of a plurality of items, and the device-side control unit extracts, from the log information received from the printer, the information that corresponds to user information among the information of the plurality of items.

According to the fourth aspect of the present invention, the information of the item depending on the user can be extracted from the data written to the wireless tag. Thus, the log information can be used effectively for each user.

A fifth aspect of the present invention provides the information processing system according to any one of the first to fourth aspect, wherein the log information includes at least one of information expressing time of writing to the wireless tag and printer identification information identifying the printer.

According to the fifth aspect of the present invention, the log information includes the information of at least one of the following: when the data were written to the wireless tag; and where the data writing to the wireless tag was performed. Thus, sufficient traceability to the issued print medium can be secured.

A sixth aspect of the present invention provides an information processing device that can communicate with a printer issuing a print medium including a wireless tag. The information processing device includes a storage unit, an issuing instruction unit, an acquisition unit, and a control unit. The storage unit stores each of a plurality of pieces of print information in association with writing data. The writing data include print identification information that identifies the print information. The issuing instruction unit transmits an issuing instruction to the printer. The issuing instruction includes one of the plurality of pieces of print information and the associated writing data. As a result of the issuing instruction, the acquisition unit acquires log information in association with tag identification information, from the printer. The tag identification information identifies the wireless tag. The log information includes a writing result and the print identification information. The writing result indicates whether writing to the wireless tag is successful. The print identification information is included in the writing data. The control unit associates, with the log information, the print information included in the plurality of pieces of print information and associated with the print identification information included in the log information received from the printer.

According to the sixth aspect of the present invention, the log information concerning the data written to the wireless tag in the print medium including the wireless tag can be associated with the print information printed on the print medium. Thus, the log information and the print information for each print medium can be managed in an integrated manner in the information processing device.

A seventh aspect of the present invention provides a program to be installed in an information processing device. The information processing device can communicate with a printer issuing a print medium including a wireless tag, and includes a storage unit storing each of a plurality of pieces of writing data in association with print information. When installed in the information processing device, the program causes a computer to execute a step of transmitting an issuing instruction to the printer. The issuing instruction includes one of the plurality of pieces of print information and the associated writing data. The program installed in the information processing device causes the computer to execute a step of acquiring log information in association with tag identification information, from the printer, as a result of the issuing instruction. The tag identification information identifies the wireless tag. The log information includes a writing result and print identification information. The writing result indicates whether writing to the wireless tag is successful. The print identification information is included in the writing data. The program installed in the information processing device causes the computer to execute a step of associating, with the log information, the print information included in the plurality of pieces of print information and associated with the print identification information included in the log information received from the printer.

According to the seventh aspect of the present invention, the log information concerning the data written to the wireless tag in the print medium including the wireless tag can be associated with the print information printed on the print medium. Thus, the log information and the print information for each print medium can be managed in an integrated manner in the information processing device.

An eighth aspect of the present invention provides an information processing method between a printer and an information processing device. The printer issues a print medium including a wireless tag. The information processing device can communicate with the printer. The information processing device stores each of a plurality of pieces of print information in association with writing data. The writing data include print identification information that identifies the print information. The information processing method includes transmitting, by the information processing device, an issuing instruction to the printer. The issuing instruction includes one of the plurality of pieces of print information and the associated writing data. The information processing method includes communicating, by the printer, to write the writing data to the wireless tag, based on the issuing instruction. The information processing method includes printing, by the printer, the print information on the print medium, based on the issuing instruction. The information processing method includes generating, by the printer, log information in association with tag identification information that identifies the wireless tag. The log information includes a writing result and print identification information. The writing result indicates whether writing to the wireless tag is successful. The print identification information is included in the writing data. The information processing method includes transmitting, by the printer, the log information to the information processing device. The information processing method includes associating, by the information processing device, the print information with the log information. This associating-target print information is included in the plurality of pieces of print information and is associated with the print identification information included in the log information received from the printer.

According to the eighth aspect of the present invention, the log information concerning the data written to the wireless tag in the print medium including the wireless tag can be associated with the print information printed on the print medium. Thus, the log information and the print information for each print medium can be managed in an integrated manner in the information processing device.

The following describes embodiments in detail with reference to the drawings.

A printer according to one embodiment is an RFID printer that issues a label (one example of a print medium) in which an inlay (one example of a wireless tag) is incorporated. The printer can communicate with the below-described management server, and issues a label, based on an issuing instruction received from the management server.

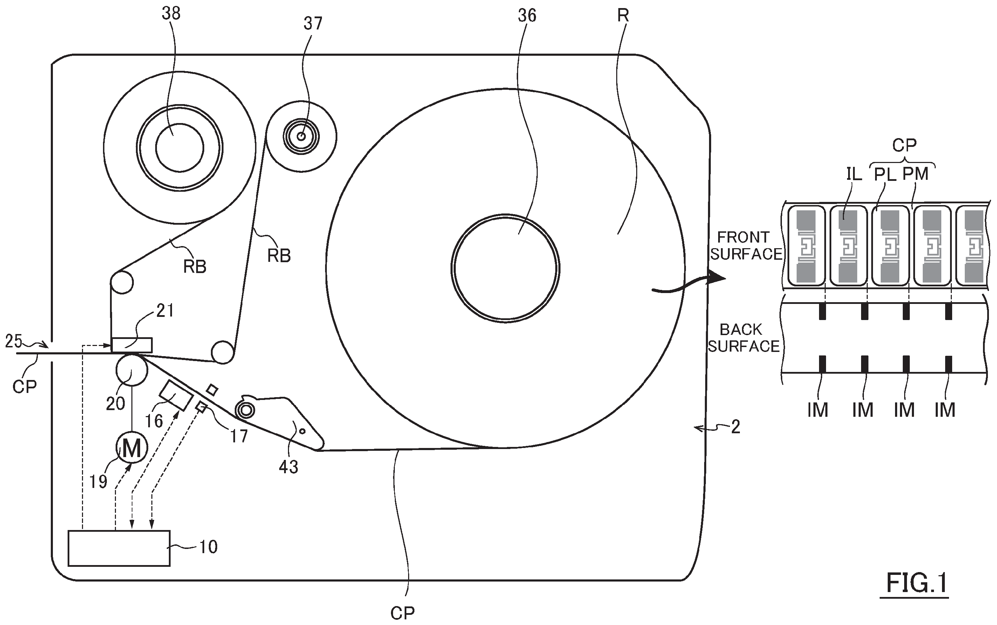

First, a configuration of the printer is described with reference to FIG. 1.

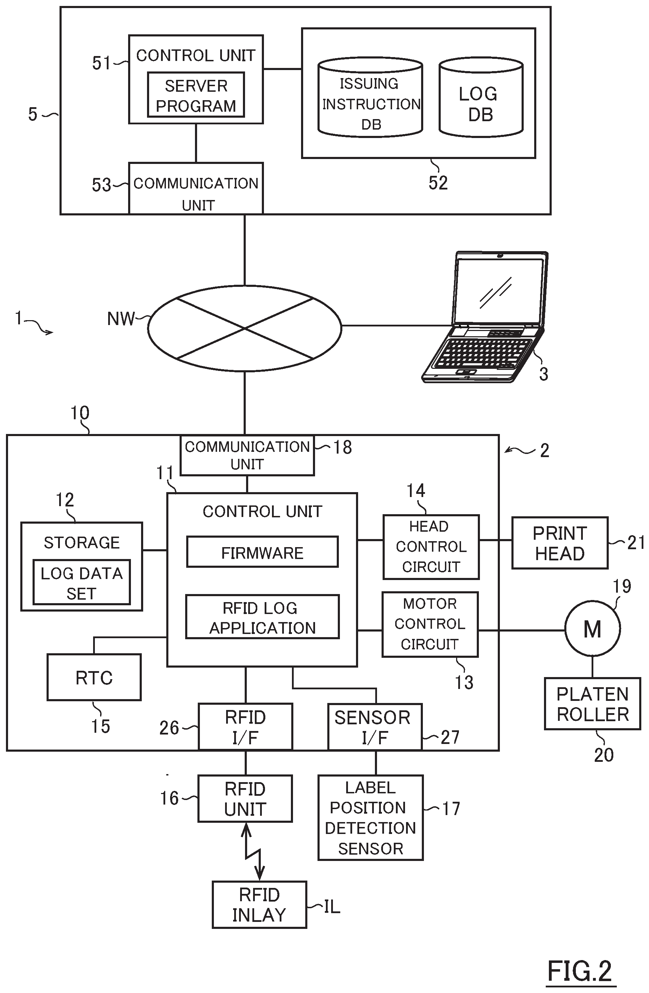

FIG. 1 is a schematic side view of the printer, in which its interior is made visible. Referring to FIG. 1, the printer 2 includes a control device 10, an RFID unit 16, a label position detection sensor 17, a platen roller 20, a print head 21, a sheet supply unit 36, a ribbon supply unit 37, and a ribbon winding unit 38. In FIG. 2, the dashed lines indicate transmission and reception of signals between the control device 10 and the respective constituents.

The sheet supply unit 36 is loaded with a rolled sheet R. As illustrated in FIG. 1, the rolled sheet R is a continuous sheet CP wound into a roll shape. The continuous sheet CP includes a band-shaped liner PM and a plurality of labels PL peelably attached at an interval on the liner PM. The liner PM includes a surface (front surface) with which adhesive surfaces of the labels PL contact and that is formed by a coat of a peeling agent such as silicone to enable the labels PL to be easily peeled. An RFID inlay IL (hereinafter, simply referred to as "inlay IL") is incorporated in the label PL. The liner PM may include a surface (back surface) on which the labels PL are not affixed. Position detection marks IM may be formed at a predetermined interval along the longitudinal direction on the back surface of the liner PM. The position detection marks IM indicate positions of the labels.

Examples used as the label PL include thermal paper and plain paper. In the case of the thermal paper, a thermal coloring layer is formed on a front surface of the thermal paper. The thermal coloring layer develops a specific color (such as black or red) when the layer reaches a predetermined temperature. Alternatively, the sheet supply unit 36 can be loaded with a rolled sheet that is a linerless label wound in a roll shape, which is not illustrated. The linerless label includes a print surface and an adhesive surface that is formed by applying an adhesive to a side opposite to the print surface.

As illustrated in FIG. 1, as the platen roller 20 rotates, the printer 2 causes the continuous sheet CP to be drawn out from the rolled sheet R, prints on the respective labels PL of the continuous sheet CP, and then causes the labels PL to be successively discharged from an issuing outlet 25. A damper 43 is provided on a feed path of the continuous sheet CP. The damper 43 includes a predetermined swing shaft. The damper 43 is installed in a state of being swingable freely about the predetermined swing shaft such that the damper 43 can apply tension to the continuous sheet CP.

The platen roller 20 is coupled to a motor 19. The platen roller 20 is installed so as to be rotatable in both forward and reverse directions in response to operation of the motor 19. At the time of printing, the platen roller 20 rotates, based on a control signal from the control device 10 to the motor 19, while holding the continuous sheet CP between the print head 21 and the platen roller 20.

When the continuous sheet CP is plain paper, at the time of printing, the platen roller 20 rotates while holding the continuous sheet CP and an ink ribbon RB between the print head 21 and the platen roller 20. The ink ribbon RB is coated with printing ink. In this case, the ink ribbon RB is fed from the ribbon supply unit 37, and is then wound by the ribbon winding unit 38. The ribbon winding unit 38 is rotated by the motor 19.

The print head 21 includes a plurality of heat-generating resistors (heat-generating elements) that generate heat when electricity passes through the heat-generating resistors. The print head 21 prints on the label PL on the continuous sheet CP, based on a control signal from the control device 10. A plurality of the heat-generating resistors are arranged in parallel in a width direction (the direction perpendicular to a feed direction of the continuous sheet CP) of the continuous sheet CP.

A label position detection sensor 17 is installed in relation to the feed path of the continuous sheet CP. The label position detection sensor 17 detects an end portion of each label PL in the feed direction of the continuous sheet CP. A detection result (output signal) of the label position detection sensor 17 is transmitted to the control device 10 and thus used to control the feeding of the continuous sheet CP.

According to one embodiment, the label position detection sensor 17 is a light transmission type sensor including a light-emitting element and a light-receiving element. The light-emitting element is arranged on one of upper and lower sides of the feed path for the continuous sheet CP. The light-receiving element is arranged on the other of the upper and lower sides of the feed path. The label position detection sensor 17 is arranged upstream of the print head 21, and can detect the label PL. When the light-receiving element receives light emitted from the light-emitting element, the label position detection sensor 17 detects an end portion of each label PL in the feed direction of the continuous sheet CP, based on a difference in received light intensity between the light transmitted through the label PL and the liner PM and the light transmitted through only the liner PM.

According to one embodiment, the label position detection sensor 17 is a light reflection type sensor including a light-emitting element and a light-receiving element, and detects presence or absence of the position detection mark IM on the back surface of the continuous sheet CP. In this case, when light emitted from the light-emitting element is reflected by the back surface of the continuous sheet CP and is then received by the light-receiving element, the label position detection sensor 17 detects an end portion of each label PL in the feed direction of the continuous sheet CP, based on a difference in received light intensity between the light reflected by the position detection mark IM on the back surface of the continuous sheet CP and the light reflected by a part included in the back surface of the continuous sheet CP but different from the position detection mark IM.

The RFID unit 16 is installed in relation to the feed path for the continuous sheet CP.

Based on a control signal from the control device 10, the RFID unit 16 (one example of a first communication unit) reads data from the inlay IL of each label PL on the fed continuous sheet CP, or writes data to the inlay IL of each label PL. An RFID antenna is fixed to the print head 21, and is electrically connected to the RFID unit 16.

Next, a label log system including the printer and the management server is described with reference to FIG. 2. FIG. 2 is a block diagram illustrating a configuration of the label log system 1.

As illustrated in FIG. 2, the label log system 1 includes the printer 2 and the management server 5. In the label log system 1, the printer 2 and the management server 5 can communicate with each other via a network NW. The network NW is not particularly limited, and may be, for example, a wireless or wired local area network (LAN), a wide area network (WAN), a mobile communication network, the Internet, or the like. A terminal device 3, which is not essential in the label log system 1, can communicate with the management server 5. The terminal device 3 remotely instructs the management server 5 to transmit an issuing instruction to the printer 2. For example, inputting information to the terminal device 3 by an administrator causes the issuing instruction for the label to be transmitted from the management server 5 to the printer 2.

As illustrated in FIG. 2, the control device 10 in the printer 2 includes a control unit 11, a storage 12, a motor control circuit 13, a head control circuit 14, a real-time clock (RTC) 15, a communication unit 18, an RFID interface (I/F) 26, and a sensor interface (I/F) 27.

The control unit 11 includes a central processing unit (CPU), a read only memory (ROM), and a random access memory (RAM). The control unit 11 controls various pieces of operation of the printer 2. The ROM that is a non-volatile memory stores firmware and an RFID log application. The firmware and the RFID log application are executed, for example, in response to startup of the printer 2. The RAM is a memory for temporarily storing data when each program is executed.

The control unit 11 generates log data in association with a TID (one example of tag identification information). The log data include a writing result indicating whether the RFID unit 16 has successfully written to the inlay IL, and an electronic product code (EPC) data included in the data written to the inlay IL. The TID identifies the inlay IL. The EPC data are an international standard identification code defined by GS1. For example, the EPC data are a code that identifies an item to which the label is affixed. In the present embodiment, for example, the EPC data can be used as print identification information that identifies print data or the like. The print data are printed on the label affixed to an individual item.

The RFID log application is a program for generating log data (one example of log information) for each label PL in cooperation with the firmware at the time of issuing each label PL. The log data include the TID for identifying the inlay IL of the label PL, the EPC data (one example of written data) written in an EPC area in the inlay IL, the writing result indicating success or failure of the writing, and the like.

The RFID log application may include information such as a printer name (e.g., a model or the like) of the printer 2 and an installation location (e.g., a specific factory or floor where the printer 2 is installed) of the printer 2.

The storage 12 stores a log data set. The log data set includes log data generated in association with one or a plurality of labels PL. As described below, the log data associated with each label PL are transmitted to the management server 5, for centralized management in the management server 5. For example, the log data can be temporarily stored in the RAM (one example of a storage unit) in the control unit 11 until the management server 5 receives an acknowledgement message. When the printer 2 is powered off without having received the acknowledgement message, the log data stored in the RAM can be sent to the storage 12 to be stored as a log data set for retransmission after the printer is powered on next time.

The motor control circuit 13 includes a drive circuit that drives the motor 19, based on a control signal sent from the firmware. The control signal includes, for example, information concerning a feed amount of the continuous sheet CP.

The head control circuit 14 (one example of a printing unit) includes an image buffer. Based on a control signal (e.g., a strobe signal) sent from the firmware, the head control circuit 14 controls electric current to flow selectively through a plurality of the heat-generating elements included in the print head 21, in accordance with the print data. Thereby, the head control circuit 14 prints information on the label.

The real-time clock 15 is a circuit that generates digital data of time, and sequentially supplies the generated digital data to the control unit 11.

The communication unit 18 (one example of a second communication unit) is a communication interface that communicates with the management server 5. A protocol for communication between the communication unit 18 and the management server 5 is not particularly limited.

The communication unit 18 receives the issuing instruction from the management server 5, and transmits the log data to the management server 5 under the control of the control unit 11.

The RFID interface 26 is an interface between the control device 10 and the RFID unit 16. The RFID interface 26 transmits, to the RFID unit 16, reading and writing control signals sent from the firmware. Based on the control signals, the RFID interface 26 receives, from the RFID unit 16, the TID read from the inlay IL, and transmits, to the RFID unit 16, data (referred to as "EPC data") that are to be written to the EPC area in the inlay IL.

The sensor interface 27 receives an output signal of the label position detection sensor 17, converts the received output signal into a digital value, and transmits the converted digital value to the control unit 11. The firmware in the control unit 11 controls the feeding of the continuous sheet CP, based on the output signal of the label position detection sensor 17.

As illustrated in FIG. 2, the management server 5 includes a control unit 51, a storage 52, and a communication unit 53.

The control unit 51 includes a CPU, a ROM, and a RAM. For example, the control unit 51 executes a server program stored in the ROM, and controls various pieces of operation of the management server 5.

The storage 52 (one example of a storage unit) stores an issuing instruction database (issuing instruction DB) and a log database (log DB). The issuing instruction database and the log database are accessed as appropriate by the server program.

The communication unit 53 is a communication interface for communicating with each of the printer 2 and the terminal device 3. The control unit 51 (one example of an issuing instruction unit) transmits the issuing instruction for the label to the printer 2 via the communication unit 53. The issuing instruction includes print data to be printed on each label and data (EPC data) to be written to the EPC area of the inlay IL in each label.

As described below, the control unit 51 associates, with the log data received from the printer 2, the print data that are included in a plurality of pieces of print data in the issuing instruction database and that are associated with the EPC data included in the log data received from the printer 2.

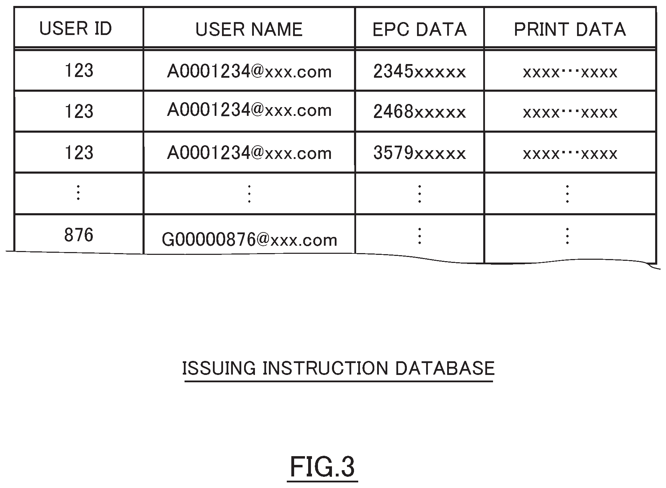

FIG. 3 illustrates an example of a data configuration of the issuing instruction database stored in the storage 52 of the management server 5.

Each record in the issuing instruction database illustrated in FIG. 3 includes a value in each of fields "USER ID", "USER NAME", "EPC DATA", and "PRINT DATA". Each record is associated with one label.

The user ID is identification information that identifies a user. Here, "user" refers to an issuer such as an individual person or a company that issues a label. The issuing-target label for each issuer that issues the label is managed by the issuing instruction database.

The user name is a name identifying the user that is an issuer of the label. In the example of FIG. 3, the user name is expressed by the URL associated with the user name. The EPC data are data to be written to the EPC area of the inlay in the associated label, and are one example of print identification information that identifies print data. The print data are data (one example of print information) to be printed on the associated label.

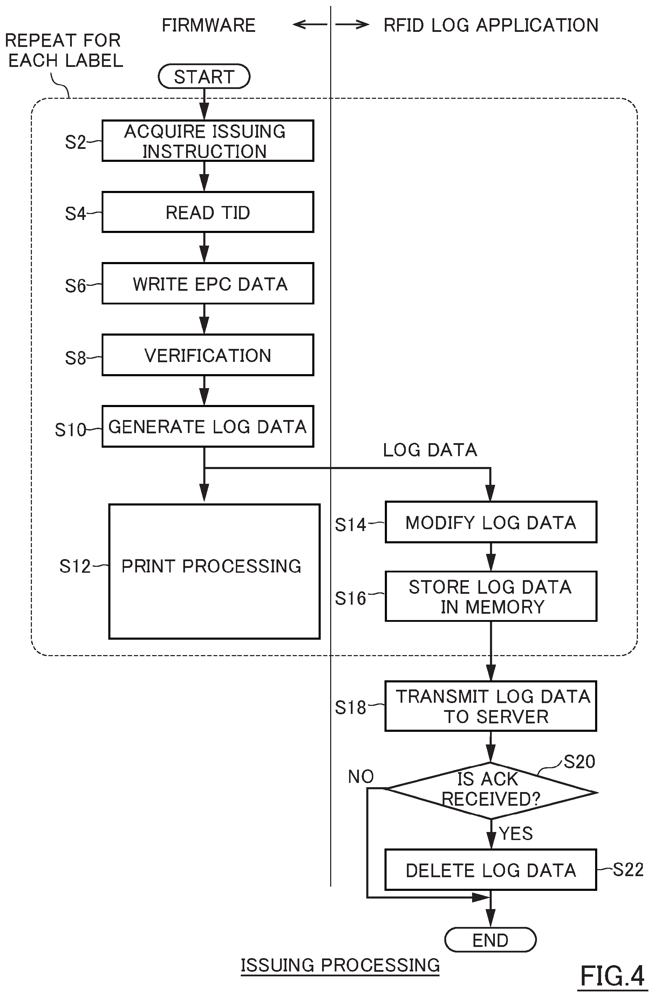

Next, issuing processing executed when the printer 2 receives the issuing instruction from the management server 5 is described with reference to FIG. 4. FIG. 4 is a flowchart representing the issuing processing executed by the control unit 11 of the printer 2. The control unit 11 executes the issuing processing such that the firmware and the RFID log application cooperate with each other. FIG. 4 distinguishably illustrates the processing executed by each of the firmware and the RFID log application.

Referring to FIG. 4, when the printer 2 receives the issuing instruction from the management server 5, the firmware of the control unit 11 acquires the issuing instruction (step S2). The issuing instruction includes the print data to be printed on the label, the EPC data to be written to the inlay of the label, and the like.

The firmware feeds the continuous sheet until the inlay of the issuing-target label reaches a predetermined position suitable for communicating with the RFID unit 16, and then reads the TID from the inlay (step S4). Next, the firmware writes, to the EPC area in the inlay, the EPC data included in the issuing instruction (step S6), and performs verification processing (step S8). At the step S6, the firmware writes the data to the EPC area, and may then lock the EPC area, thereby protecting the EPC area.

In the verification processing at the step S8, the firmware reads the data from the EPC area of the inlay, and verifies whether the read data match with the EPC data included in the issuing instruction. In the verification processing, the firmware determines the writing result as "success" when the read data match with the EPC data, and determines the writing result as "failure" when the read data do not match with the EPC data.

Next, the firmware generates the log data (step S10). The log data generated at the step S10 include the TID read at the step S4, the data (one example of read information) read from the EPC area of the inlay in the verification processing at the step S8, a value (a value associated with "success" or "failure") indicating the writing result in the verification processing at the step S8, and the like. When the writing at the step S6 is successfully performed, the data read from the EPC area of the inlay in the verification processing match with the EPC data included in the issuing instruction. The log data generated at the step S10 are passed to the RFID log application.

Next, the firmware executes print processing (one example of first processing) (step S12). In the print processing, the firmware generates image data, based on the print data included in the issuing instruction, and performs printing on the issuing-target label, based on the image data, while feeding the continuous sheet.

In parallel with the execution of the print processing by the firmware, the RFID log application executes processing (one example of second processing) of modifying the log data received from the firmware (step S14) and storing the post-modification log data in a memory (i.e., the RAM in the control unit 11) (step S16).

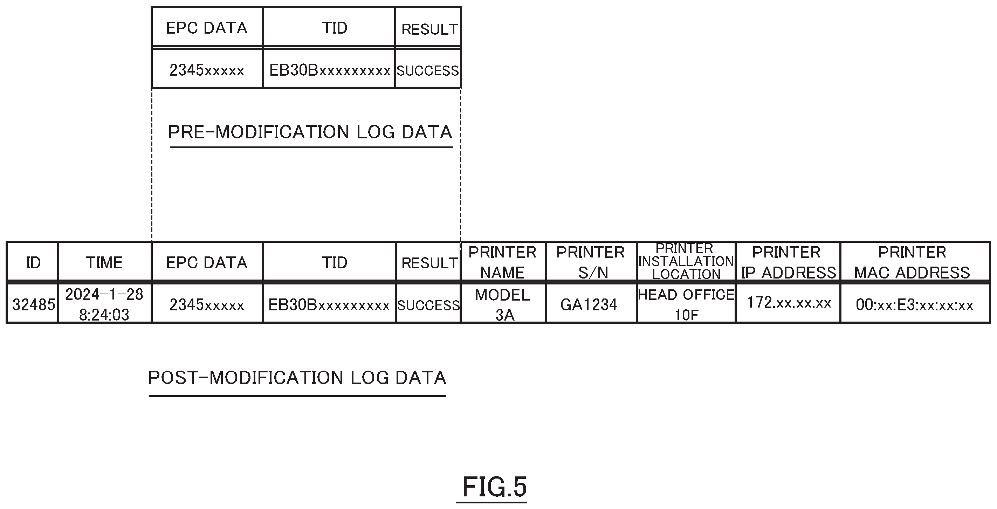

FIG. 5 illustrates an example of modifying the log data at the step S14. FIG. 5 illustrates an example of a data configuration of both of the log data (the pre-modification log data) generated by the firmware at the step S10 in FIG. 4 and passed from the firmware to the RFID log application and the post-modification log data that have been modified by the RFID log application.

In the example illustrated in FIG. 5, the post-modification log data include, in addition to the pre-modification log data, the following information: identification information ("ID") that identifies log data added by the RFID log application; the time ("TIME") that the EPC data were written; a printer name ("PRINTER NAME") of the printer 2; a serial number ("PRINTER S/N") of the printer 2; the installation location ("PRINTER INSTALLATION LOCATION") of the printer 2; an IP (Internet protocol) address ("PRINTER IP ADDRESS") of the printer 2; and a MAC (media access control) address ("PRINTER MAC ADDRESS") of the printer 2. All of these pieces of information are not indispensable. However, the information (additional information) added to the log data supplements the information about what data were written to which inlay (TID), with the information about at least one of the following: when the data were written; which printer wrote the data; and where the printer is located.

The printer name, the serial number, the IP address, and the MAC address of the printer 2 are examples of the printer identification information that identifies the printer 2. Adding the printer identification information to the log data enables the printer having issued the label to be identified based on the log data. In other words, based on the log data, it can be identified which inlay (TID) the EPC data were written to and where the writing of the EPC data was performed

The additional information represented in FIG. 5 is merely one example. For example, the log data may include information of at least one of the serial number, the installation location, the IP address, and the MAC address of the printer 2. The log data including the information of at least one of the serial number, the installation location, the IP address, and the MAC address of the printer 2 enables the printer having issued the label to be specifically identified based on the log data. In other words, the post-modification log data are data that include, for each TID, at least one of the serial number, the installation location, the IP address, and the MAC address of the printer 2, in addition to the pre-modification log data.

Referring again to FIG. 4, in one embodiment, the processing of modifying and storing the log data at the steps S14 and S16 by the RFID log application in the control unit 11 is executed at least partially in parallel with the print processing at the step S12 by the firmware in the control unit 11. In one embodiment, before the firmware finishes printing the label, the RFID log application starts adding or modifying on the log data so as to include the additional information in the log data. Then, the RFID log application stores the post-modification log data in the RAM. Preferably, the RFID log application completes the processing of modifying and storing the log data at the steps S14 and S16 before the firmware completes the print processing on the processing-target label.

In a case where the RFID log application completes the processing of modifying and storing the log data at the steps S14 and S16 before the firmware completes the print processing on the processing-target label, throughput for issuing labels is not reduced. Even in a case where the RFID log application does not complete the processing of modifying and storing the log data at the steps S14 and S16 before the firmware completes the print processing on the processing-target label, the log data can be efficiently generated by executing the processing of modifying and storing the log data in parallel with the print processing.

Executing the steps S2 to S16 in the print processing results in that one label is issued and the log data are generated and stored. The RFID log application may transmit the log data to the management server 5 each time the RFID log application generates the above-described post-modification log data illustrated in FIG. 5. Alternatively, the RFID log application may transmit the log data to the management server 5 each time the RFID log application accumulates the log data corresponding to a predetermined number (within a range from 10 to 50, for example) of the labels. The printer 2 temporarily stores, in the RAM of the control unit 11, the issuing instructions successively received from the management server 5. The firmware successively extracts and processes the issuing instructions stored in the RAM.

When the log data corresponding to the predetermined number of the labels have been accumulated, the RFID log application transmits, to the management server 5, the post-modification log data illustrated in FIG. 5 (step S18). When the management server 5 successfully receives the log data (i.e., when the transmission of the log data is successful), the management server 5 transmits an acknowledgement message ACK to the printer 2. Accordingly, when the RFID log application receives the acknowledgement message ACK from the management server 5 (step S20) in response to the transmission of the log data at the step S18, the RFID log application deletes the log data from the RAM in the control unit 11 (step S22). When the transmission of the log data is successful, deleting the log data allows a storage area of the memory in the printer 2 to be used effectively.

When the RFID log application does not receive the acknowledgement message ACK, the RFID log application does not delete the log data. However, when the RFID log application does not receive the acknowledgement message ACK within a predetermined period of time after transmitting the log data, the RFID log application may retransmit the log data to the management server 5. An example of a case where the acknowledgement message ACK is not transmitted from the management server 5 is a case where the management server 5 ceases functioning due to a fault. In this case, after the management server 5 recovers, the acknowledgement message ACK is transmitted.

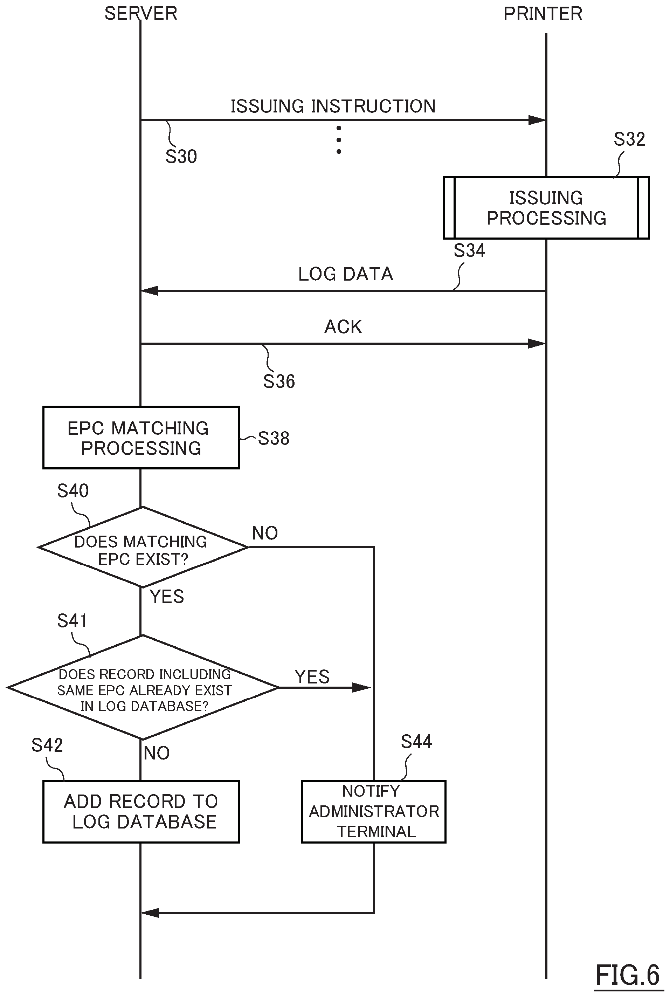

Next, the processing between the printer 2 and the management server 5 is described with reference to FIG. 6. FIG. 6 is a sequence chart that represents processing in the label log system 1.

The management server 5 transmits the issuing instruction to the printer 2 (step S30). The printer 2 that has received the issuing instruction executes the issuing processing represented in FIG. 4 (step S32). The step S30 is performed consecutively for each issuing-target label. The printer 2 executes the issuing processing, based on the received issuing instructions, and transmits, to the management server 5, the log data (the post-modification log data illustrated in FIG. 5) corresponding to the predetermined number of labels (step S34). When the management server 5 successfully receives the log data from the printer 2, the management server 5 transmits the acknowledgement message ACK to the printer 2 (step S36). When the printer 2 receives the acknowledgement message ACK from the management server 5, the printer 2 deletes the log data transmitted at the step S34.

Next, the management server 5 executes the processing of steps S38 to S44. This processing is executed by the server program in the control unit 51, for example.

The control unit 51 performs EPC matching processing, using the log data (the post-modification log data illustrated in FIG. 5) acquired from the printer 2 in the above-described processing at the step S34 (step S38). In the EPC matching processing, the control unit 51 determines whether the EPC data included in the post-modification log data corresponding to each label illustrated in FIG. 5 match with the EPC data included in the records of the issuing instruction database (FIG. 3) that is the basis for the issuing instruction used in the processing at the step S30.

When the EPC data included in the log data match with the EPC data included in any of the records in the issuing instruction database (step S40: YES), the control unit 51 determines whether the record including the same EPC data already exists in the log database (step S41). Here, the fact that the record including the same EPC data already exists in the log database at the step S41 means that the printer 2 has issued two or more labels each including the inlay to which the same EPC data have been written. The issuance of two or more labels each including the inlay to which the same EPC data have been written occurs, for example, when a printer cover is opened while the printer 2 is issuing the label. When the record including the same EPC data already exists in the log database (step S41: YES), the control unit 51 notifies a warning message to an administrator terminal such as the terminal device 3 (step S44). Notifying the warning message to the administrator terminal enables the administrator to recognize that two or more labels of the same EPC data have been issued.

When the record including the same EPC data does not exist in the log database (step S41: NO), the control unit 51 adds a record for the processing-target log data to the log database (step S42). The log database is, for example, a database configured to include the issuing instruction database (FIG. 3) and the post-modification log data that are acquired from the printer 2 and added to the issuing instruction database. This record is added by searching the issuing instruction database for a record including the EPC data included in the log data received from printer 2, and associating, with the log data received from the printer 2, a data group (the user ID, the user name, the print data, and the like) included in the corresponding record in the issuing instruction database. In other words, from the viewpoint of the matching between the EPCs, the record included in the issuing instruction database and corresponding to the log data received from the printer 2 is identified, and the identified record and the log data received from printer 2 are added to the log database, as a record in a combination with each other.

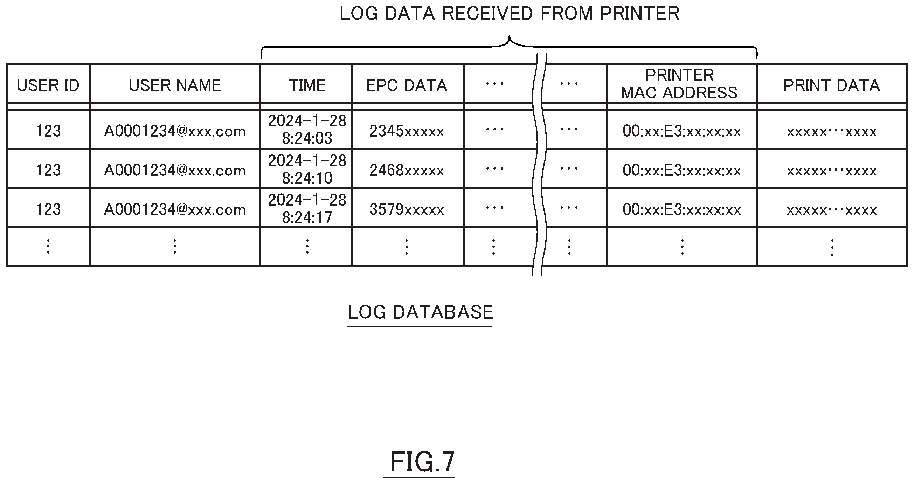

FIG. 7 illustrates an example of a data configuration of the log database. Each record in the log database illustrated in FIG. 7 is data configured to include the log data received from the printer 2 and include the user ID, the user name, and the print data in the issuing instruction database illustrated in FIG. 3 that are added to the received log data. In other words, in one embodiment, the control unit 51 associates, with the log data received from the printer 2, the record that is included in a plurality of the records in the issuing instruction database and that includes the EPC data included in the log data received from the printer 2. For example, when the EPC data included in the log data received from printer 2 are "2345xxxxx" as illustrated in FIG. 5, the control unit 51 identifies the record including the same EPC data, from among a plurality of the records in the issuing instruction database (FIG. 3). The control unit 51 associates, with the log data received from the printer 2, the data that are included in the identified record and that are the user ID, the user name, and the print data. Thereby, the control unit 51 generates the thus-associated data as the first record in the log database illustrated in FIG. 7. Associating not only the print data but also the user ID and the user name enables the record associated with the specific user to be extracted from the log database.

Referring again to FIG. 6, when the EPC data included in the log data do not match with the EPC data included in any record in the issuing instruction database (step S40: NO), the printer 2 has generated the log data that do not match with the issuing instruction. In this case, the control unit 51 notifies a warning message to the administrator terminal such as the terminal device 3 (step S44). Notifying the warning message to the administrator terminal enables the administrator to recognize that the log data include the inappropriate EPC data. In the EPC matching processing at the step S38, the log database (FIG. 7) may be used instead of the issuing instruction database (FIG. 3). This log database (FIG. 7) is generated as a combination of the above-described issuing instruction database (FIG. 3) and the post-modification log data (FIG. 5) acquired from the printer 2.

As described above, according to the label log system 1, the printer 2 generates the log data in association with the TID of the inlay so as to include not only the writing result indicating whether the data have been successfully written to the inlay, but also the information about at least one of the following: when the data were written; and where the writing was performed. The control unit 11 of the printer 2 executes the processing of controlling the printing of the print data on the label, and executes the processing of generating the log data. At this time, the control unit 11 executes these two pieces of processing at least partially in parallel with each other. Thus, the printer 2 can efficiently generate the log data concerning the data written to the label.

Further, according to the label log system 1, the management server 5 stores the issuing instruction database to be referenced for issuing the label issuing instruction. For each issuing-target label, the management server 5 transmits, to the printer 2, the print data and the EPC data corresponding to the record in the issuing instruction database. This transmission is performed successively for the respective issuing-target labels. The management server 5 successively receives the log data for the issued labels, and associates, with the issuing instruction database, the log data received from the printer 2, using the EPC data included in the log data received from the printer 2. For this reason, the management server 5 can manage the log data and the print data for each label in a centralized manner, without transmission of the print data for each label from the printer 2 to the management server 5. The log data and the print data are associated with each other and managed in a centralized manner in the management server 5 so that sufficient traceability can be secured for the issued RFID labels. Thus, for example, a manufacturer or a distributor that affixes RFID labels to items and distributes the items can reliably prove that the encoding has been made, for a situation in which the RFID label becomes unreadable, and can also promptly identify the print information printed on the label, for a situation of missing of the item to which the label has been affixed.

In the label log system 1, the management server 5 determines whether the EPC data included in the log data received from the printer 2 match with any of a plurality of pieces of the EPC data included in the issuing instruction database. When the log data include the EPC data that are not included in the issuing instruction, this means that the printer 2 has written the inappropriate EPC data to the inlay of the label. Thus, the above-described determination enables determination of whether the printer 2 has appropriately written the EPC data, and can ensure the EPC data unique for each label.

In one embodiment, when the management server 5 stores, in the log database, the log data received from the printer 2, the management server 5 determines whether the EPC data included in the log data match with the EPC data included in any of pieces of the log data already stored in the log database. When the EPC data included in the log data match with the EPC data included in any of pieces of the log data already stored in the log database, this means that the same EPC data have been written to the inlay of each of two or more labels and these two or more labels have been issued. Generating a warning in this case can more reliably ensure the EPC data unique for each label.

In the case described in the above-described embodiment, the writing data to be written to the inlay are the EPC data. However, there is no limitation to this. Since the inlay includes a USER area that is freely writable by the user, the writing data may include data (USER data) to be written to the USER area, in addition to the EPC data.

The user can freely set a data format of the USER data. For this reason, in one embodiment, the USER data are constituted by the information of a plurality of items associated with the user name or the user ID. For example, when the user is a retailer, the USER data may be constituted by information of the items such as a product ID (JAN code or the like), expiration, and a content amount of a product. When the user is a pharmaceutical product company, the USER data may be constituted by information of the items such as a product ID, expiration, pharmaceutical product classification, and ingredients of a product. When the user is a manufacturer, the USER data may be constituted by information of the items such as a product ID, a manufacturing date, and a lot number.

The management server 5 may extract, from the USER data in the log data received from the printer 2, the information of the items depending on the user ID, and stores the extracted information in the log database. For example, the management server 5 stores, in each record in the log database of FIG. 7, the information such as the expiration of the product. Thereby, even when the log data transmitted from the printer 2 to the management server 5 has the same format, the data to be stored in the log database can be modified for each user, and thus, each user can effectively use the log database. Further, the printer 2 may edit the above-described post-modification log data illustrated in FIG. 5, for example, depending on the user ID included in the issuing instruction. Then, the printer 2 may transmit the edited log data to the management server 5, or may transmit, to the management server 5, the log data edited for each food product having the best-before expiration or edited for each item. Thereby, the management server 5 can manage the log data written to each label and the print data in a centralized manner, using the log data edited for each user or edited depending on the information in the USER data, for example.

One embodiment provides a program to be installed in the management server 5 that can communicate with the printer 2 and that includes the issuing instruction database storing each of a plurality of pieces of the EPC data in association with the print data. When installed in the management server 5, the program causes a computer to execute the following steps. The program is executable by one or more processors.
(I) the step of transmitting, to the printer 2, the issuing instruction that includes one of a plurality of pieces of the print data in the issuing instruction database and that includes the associated writing data.
(II) the step of acquiring the log data in association with the TID, from the printer 2, as a result of the issuing instruction, the log data including the writing result and the EPC data, the writing result indicating whether the writing to the inlay is successful, the EPC data being included in the writing data.
(III) a step of associating, with the log data, the print data that are included in a plurality of pieces of the print data and that are associated with the EPC data included in the log data received from the printer 2.

One embodiment provides a non-transitory storage medium that stores the above-described program.

One embodiment provides an information processing method between the printer 2 and the management server 5. The printer 2 issues the print medium including the inlay. The management server 5 can communicate with the printer 2. The management server 5 stores each of a plurality of pieces of the print data in association with the writing data including the EPC that identify the print data.

The information processing method includes the following processing:
transmitting, by the management server 5, the issuing instruction to the printer 2, the issuing instruction including one of a plurality of pieces of the print data and the associated writing data;
performing, by the printer 2, communication to write the writing data to the inlay, based on the issuing instruction;
printing, by the printer 2, the print data on the print medium, based on the issuing instruction;
generating, by the printer 2, the log data in association with the TID that identifies the inlay, the log data including the writing result and the EPC, the writing result indicating whether the writing to the inlay is successful, the EPC being included in the writing data;
transmitting, by the printer 2, the log data to the management server 5; and
associating, by the management server 5, with the log data, the print data included in a plurality of pieces of the print data and associated with the EPC included in the log data received from the printer 2.

Although the embodiments of the information processing system, the information processing device, the program, and the information processing method according to the present invention are described above, the present invention is not limited to the above-described embodiments. Further, the above-described embodiments can be variously improved or modified without departing from the essence of the present invention.

The above-described processing by the printer 2 and the management server 5 is merely one example. At least a part of the above-described processing by the printer 2 may be executed by the management server 5, and at least a part of the above-described processing by the management server 5 may be executed by the printer 2. At least a part of the functions implemented in the printer 2 may be implemented in the management server 5, and at least a part of the functions implemented in the management server 5 may be implemented in the printer 2. In other words, the functions may be distributed between the printer 2 and the management server 5 as appropriate. In the above-described embodiment, the management server 5 is configured to include the issuing instruction database and the log dataset. However, there is not limitation to this. The issuing instruction database and the log dataset may be stored in a database server provided separately from the management server. In this case, the management server and the database server process the respective databases in cooperation with each other.

The present invention is related to Japanese Patent Application No. 2024-003633 filed with the Japan Patent Office on January 12, 2024, the entire contents of which are incorporated by reference into Description of the present application.

## Claims

1. An information processing system comprising:
a printer that issues a print medium including a wireless tag; and
an information processing device that can communicate with the printer,
the information processing device comprising:
a storage unit that stores each of a plurality of pieces of print information in association with writing data, the writing data including print identification information that identifies the print information; and
an issuing instruction unit that transmits an issuing instruction to the printer, the issuing instruction including one of the plurality of pieces of print information and the associated writing data,
the printer comprising:
a first communication unit that communicates to write the writing data to the wireless tag, based on the issuing instruction;
a printing unit that prints the print information on the print medium, based on the issuing instruction;
a printer control unit that generates log information in association with tag identification information that identifies the wireless tag, the log information including a writing result and the print identification information, the writing result indicating whether the first communication unit has successfully performed writing to the wireless tag, the print identification information being included in the writing data; and
a second communication unit that transmits the log information to the information processing device,
the information processing device further comprising:
a device-side control unit that associates, with the log information, the print information that is included in the plurality of pieces of print information and that is associated with the print identification information included in the log information received from the printer.

2. The information processing system according to claim 1, further comprising:
a terminal device that can communicate with the information processing device, wherein
the device-side control unit notifies a message to the terminal device when the print identification information included in the log information received from the printer does not match with the print identification information included in any of pieces of the writing data stored in the storage unit.

3. The information processing system according to claim 1, wherein
the storage unit stores each of the plurality of pieces of print information in association with the writing data and user information, and
when the print identification information included in the log information received from the printer matches with the print identification information included in any of pieces of the writing data stored in the storage unit, the device-side control unit associates the corresponding print information and user information with the log information.

4. The information processing system according to claim 3, wherein
the data written to the wireless tag include information of a plurality of items, and
the device-side control unit extracts, from the log information received from the printer, the information that corresponds to user information among the information of the plurality of items.

5. The information processing system according to any one of claims 1 to 4, wherein
the log information includes at least one of information expressing time of writing to the wireless tag and printer identification information identifying the printer.

6. An information processing device that can communicate with a printer issuing a print medium including a wireless tag, the information processing device comprising:
a storage unit that stores each of a plurality of pieces of print information in association with writing data, the writing data including print identification information that identifies the print information;
an issuing instruction unit that transmits an issuing instruction to the printer, the issuing instruction including one of the plurality of pieces of print information and the associated writing data;
an acquisition unit that acquires log information in association with tag identification information, from the printer, as a result of the issuing instruction, the tag identification information identifying the wireless tag, the log information including a writing result and the print identification information, the writing result indicating whether writing to the wireless tag is successful, the print identification information being included in the writing data; and
a control unit that associates, with the log information, the print information that is included in the plurality of pieces of print information and that is associated with the print identification information included in the log information received from the printer.

7. A program to be installed in an information processing device that can communicate with a printer issuing a print medium including a wireless tag and that includes a storage unit storing each of a plurality of pieces of writing data in association with print information, wherein when installed in the information processing device, the program causes a computer to execute:
a step of transmitting an issuing instruction to the printer, the issuing instruction including one of the plurality of pieces of print information and the associated writing data;
a step of acquiring log information in association with tag identification information, from the printer, as a result of the issuing instruction, the tag identification information identifying the wireless tag, the log information including a writing result and print identification information, the writing result indicating whether writing to the wireless tag is successful, the print identification information being included in the writing data; and
a step of associating, with the log information, the print information that is included in the plurality of pieces of print information and that is associated with the print identification information included in the log information received from the printer.

8. An information processing method between a printer that issues a print medium including a wireless tag and an information processing device that can communicate with the printer, wherein
the information processing device stores each of a plurality of pieces of print information in association with writing data, and the writing data include print identification information that identifies the print information, and
the information processing method comprises:
transmitting, by the information processing device, an issuing instruction to the printer, the issuing instruction including one of the plurality of pieces of print information and the associated writing data;
communicating, by the printer, to write the writing data to the wireless tag, based on the issuing instruction;
printing, by the printer, the print information on the print medium, based on the issuing instruction;
generating, by the printer, log information in association with tag identification information that identifies the wireless tag, the log information including a writing result and print identification information, the writing result indicating whether writing to the wireless tag is successful, the print identification information being included in the writing data;
transmitting, by the printer, the log information to the information processing device; and
associating, by the information processing device, with the log information, the print information included in the plurality of pieces of print information and associated with the print identification information included in the log information received from the printer.
